(19) Europäisches Patentamt
European Patent Office
Office européen des brevets

(11) **EP 2 538 535 B1**

(12) **EUROPEAN PATENT SPECIFICATION**

(45) Date of publication and mention
of the grant of the patent:
**11.08.2021 Bulletin 2021/32**

(51) Int Cl.:
***H02M 3/335*** *(2006.01)*

(21) Application number: **12173158.2**

(22) Date of filing: **22.06.2012**

(54) **Control device for a resonant converter**

Steuervorrichtung für einen Resonanzwandler

Dispositif de contrôle pour convertisseur résonnant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2011 IT MI20111156**

(43) Date of publication of application:
**26.12.2012 Bulletin 2012/52**

(73) Proprietor: **STMicroelectronics S.r.l.**
**20864 Agrate Brianza (MB) (IT)**

(72) Inventor: **Cantoro, Claudio**
**20010 Cornaredo (MI) (IT)**

(74) Representative: **Bosotti, Luciano et al**
**Buzzi, Notaro & Antonielli d'Oulx S.p.A.**
**Corso Vittorio Emanuele II, 6**
**10123 Torino (IT)**

(56) References cited:
WO-A2-2011/055285 US-A- 6 018 467
US-A1- 2009 251 926 US-B1- 7 313 004

• TAOTAO JIN ET AL: "Multiphase LLC Series Resonant Converter for Microprocessor Voltage Regulation", THE 2006 IEEE INDUSTRY APPLICATIONS CONFERENCE FORTY-FIRST IAS ANNUAL MEETING, CONFERENCE RECORD OF, IEEE, PISCATAWAY, NJ, US, 1 October 2006 (2006-10-01), pages 2136-2143, XP031026317, ISBN: 978-1-4244-0364-6
• NALBANT M K: "A new and improved control technique greatly simplifies the design of ZVS resonant inverters and DC/DC power supplies", APPLIED POWER ELECTRONICS CONFERENCE AND EXPOSITION, 1995. APEC '95. C ONFERENCE PROCEEDINGS 1995., TENTH ANNUAL DALLAS, TX, USA 5-9 MARCH 1995, NEW YORK, NY, USA,IEEE, US, 5 March 1995 (1995-03-05), pages 694-701, XP010147721, DOI: 10.1109/APEC.1995.469095 ISBN: 978-0-7803-2482-4

**Description**

The present invention relates to a control device for a resonant converter.

Forced switching converters (switching converters) with devices used for controlling them are known from the state of the art. Resonant converters are a wide range of forced switching converters characterized by the presence of a resonant circuit playing an active role in determining the input-output power flow. In these converters, a bridge (half bridge) consisting of four (two) power switches (typically power MOFSETs) supplied by a direct voltage generates a voltage square wave that is applied to a resonant circuit tuned to a frequency close to the fundamental frequency of said square wave. Thereby, because of the selective features thereof, the resonant circuit mainly responds to the fundamental component and negligibly to the higher-order harmonics of the square wave. As a result, the circulating power may be modulated by changing the frequency of the square wave, holding the duty cycle constant at 50%. Moreover, depending on the resonant circuit configuration, the currents and/or voltages associated with the power flow have a sinusoidal or a piecewise sinusoidal shape.

These voltages are rectified and filtered so as to provide dc power to the load. In offline applications, to comply with safety regulations, the rectification and filtering system supplying the load is coupled to the resonant circuit by a transformer providing the isolation between source and load, required by the above-mentioned regulations. As in all isolated network converters, also in this case a distinction is made between a primary side (as related to the primary winding of the transformer) connected to the input source and a secondary side (as related to the secondary winding(s) of the transformer) providing power to the load through the rectification and filtering system.

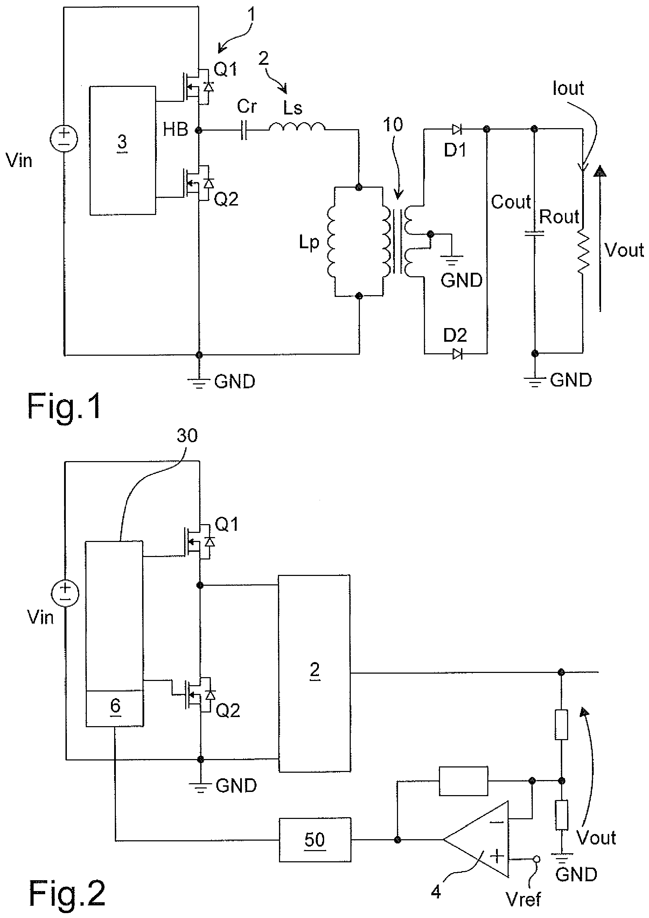

Presently, among the many types of resonant converters, the so-called LLC resonant converter is widely used, especially in the half bridge version thereof. The designation LLC comes from the resonant circuit employing two inductors (L) and a capacitor (C); a principle schematic of an LLC resonant converter is shown in figure 1. The resonant converter 1 comprises a half bridge of transistors Q1 and Q2 between the input voltage Vin and the ground GND driven by a driving circuit 3. The common terminal HB between the transistors Q1 and Q2 is connected to a circuit block 2 comprising a series of a capacitor Cr, an inductance Ls and another inductance Lp connected in parallel to a transformer 10 with a center-tap secondary. The two windings of the center-tap secondary of transformer 10 are connected to the anodes of two diodes D1 and D2 the cathodes of which are both connected to the parallel of a capacitor Cout and a resistance Rout; the voltage across the parallel Rout, Cout is the output voltage Vout of the resonant converter, while the dc output current Iout flows through Rout.

Resonant converters offer considerable advantages as compared to the traditional switching converters (non-resonant converters, typically PWM - Pulse Width Modulation - controlled): waveforms without steep edges, low switching losses in the power switches due to the "soft" switching thereof, high conversion efficiency (>95% is easily reachable), ability to operate at high frequencies, low EMI (Electro Magnetic Interference) generation and, ultimately, high power density (i.e. enabling to build conversion systems capable of handling considerable power levels in a relatively small space).

As in most dc-dc converters, a closed-loop, negative-feedback control system keeps the output voltage of the converter constant upon changing the operating conditions, i.e. the input voltage Vin and/or the output current Iout thereof. This is achieved by comparing a portion of the output voltage to a reference voltage Vref. The difference, or error signal Er, between the value provided by the output voltage sensing system (usually, a resistor divider) and the reference value is amplified by an error amplifier. Its output Vc modifies a quantity x inside the converter which the energy carried by the converter during each switching cycle substantially depends on. As discussed above, such a significant quantity in resonant converters is the switching frequency of the square wave stimulating the resonant circuit.

As in all control systems in dc-dc converters, the frequency response of the error amplifier should be properly designed so as to ensure:

- a stable control loop (i.e. that, upon disturbances of the operating conditions of the converter, once the transient caused by the disturbance has finished, the output voltage tends to recover a steady state value close to that before the disturbance;
- good regulation (i.e. the new constant value recovered by the output voltage following a disturbance is very close to that preceding the perturbation);
- good dynamic performance (i.e. during the transient following a disturbance, the output voltage does not excessively deviate from the desired value and the transient itself is short).

The above-mentioned control objectives may be expressed in terms of some characteristic quantities of the transfer function of the control loop, such as the band width, the phase margin, the dc gain. In a dc-dc converter, these objectives may be achieved by acting on the frequency response of the error amplifier, modifying the gain thereof and conveniently placing the poles and zeroes of the transfer function thereof (frequency compensation). This is normally achieved by using passive networks comprising resistances and capacitors of appropriate value connected thereto.

However, in order to determine the frequency compensation needed to obtain the desired features of the transfer function of the control loop, it is necessary to know both the modulator gain, i.e. the gain of the system converting the control voltage Vc into the control quantity x, and the frequency response of the converter itself to the variations of the quantity x.

The modulator gain does not usually depend on the frequency, and is fixed inside the control integrated circuit.

Although dc-dc converters are strongly non-linear system just because of the switching action, with suitable approximations and under certain hypothesis, their frequency response may be described and represented by the same means used for linear networks and, therefore, by a transfer function characterized by gain, zeroes and poles. This transfer function essentially depends on the converter topology, i.e. the mutual configuration of the elements handling the power, on its operation mode, i.e. whether, at every switching cycle, there is a continuous current circulation in the magnetic part (Continuous Current Mode, CCM) or not (Discontinuous Current Mode, DCM), and on the quantity x controlled by the control loop. While in PWM converters different control methods are commonly used - traditionally, in resonant converters, the quantity used to control the converter is directly the switching frequency of the square wave applied to the resonant circuit.

In all integrated control circuits for dc-dc resonant converters available in the market, the control directly operates on the oscillation frequency of the half bridge (Direct Frequency Control, DFC). Figure 2 shows a control system for this type of resonant converters. The output of the error amplifier 4 on the secondary side, having a part of the output voltage Vout at the input of the inverting terminal and a reference voltage Vref on the non-inverting terminal, is transferred to the primary side by means 50, for example a photocoupler, so as to ensure the primary-secondary isolation required by the safety regulations, and acts upon a voltage-controlled oscillator (VCO) 6 or a current-controlled oscillator (ICO) inside the control integrated circuit 30.

This type of control arises two classes of problems. A first one relates to the fact that, unlike PWM converters, dynamic small-signal models for resonant converters expressed in terms of gain, poles and zeroes are not known in the literature (there are some approximated forms of questionable practical use). In other words, the transfer function of the power stage is not known. A second class of problems relates to the fact that, according to study results based on simulations, said transfer function of the power stage shows a strongly variable dc gain, and a number of poles varying from one to three and with a very mobile position, depending on the operating point. There is finally a pole due to the output capacitor.

The large gain variation and the highly variable pole configuration make the frequency compensation of the feedback control loop quite problematic. As a result, it is virtually impossible to obtain a transient response optimized under all the operating conditions, and a considerable trade-off between stability and dynamic performance is required. Additionally, the energy transfer strongly depends on the input voltage (audio-susceptibility), so that the control loop has to significantly change the operating frequency to compensate said variations. Since in the input voltage of the converter there is always an alternating component with a frequency twice that of the mains voltage, the loop gain at that frequency needs to be quite high to effectively reject said alternating component and significantly attenuate the residual ripple visible in the output voltage.

All these factors risk to rise problems which may be not all solvable, especially when the load supplied by the converter has great dynamic changes and/or there are strict specifications on the dynamic accuracy or the response speed or the rejection of the input ripple.

Finally, another problem related to the DFC control method is the sensitivity of the switching frequency to the value of the components in the resonant circuit (Cr, Ls and Lp). These values have a statistical spread due to their fabrication tolerances and this adversely affects the effectiveness of the protection circuits. In fact, generally speaking, to avoid that a converter may be operated abnormally, the control quantity x should be limited. In the case of resonant converters, the resonant controllers implementing DFC allow the operating frequency of the half bridge to be top and bottom limited. These limits should be set considering that, due to the above-mentioned value spread, the operating frequency range of the converter will change accordingly. The minimum limit set to the frequency should thus be lower than the minimum value which may be taken by the lower end of said range, and the maximum limit higher than the maximum value which may be taken by the higher end of said range. This significantly reduces the effectiveness of the frequency limitation as a means for preventing abnormal operational conditions.

Accordingly, the present invention relates to a control device for a resonant converter according to the preamble of Claim 1, which is known, e.g. from WO 2011/055285 A2. Documents US 2009/251926 A1 and US 7 313 004 B1 may also be of interest for the present disclosure.

In view of the state of the art, the object of the present invention is to provide a control device of a resonant converter which is different from and simpler than the known ones.

According to the present invention, this object is achieved by means of a control device according to claim 1.

The features and advantages of the present invention will become apparent from the following detailed description of some embodiments thereof, illustrated only by way of non-limitative examples in the annexed drawings, in which:

figure 1 shows a circuit schematic of a LLC resonant converter in accordance with the prior art;

figure 2 shows a block schematic of a resonant converter with adjustment of the output voltage in accordance with the prior art;

figure 3 shows a circuit schematic of a resonant converter with a control device which is not part of the claimed invention;

figure 4 shows a circuit schematic of the control device in figure 3;

figure 5 shows a circuit schematic of a resonant converter with a control device in accordance with an embodiment of the present invention;

figure 6 shows a circuit schematic of the control device in figure 5;

figure 7 shows some time diagrams of signals involved in the device of figure 5;

figure 8 shows a circuit schematic of a resonant converter with a control device in accordance with a variant of the embodiment of the present invention;

figure 9 shows a circuit schematic of the control device in figure 8.

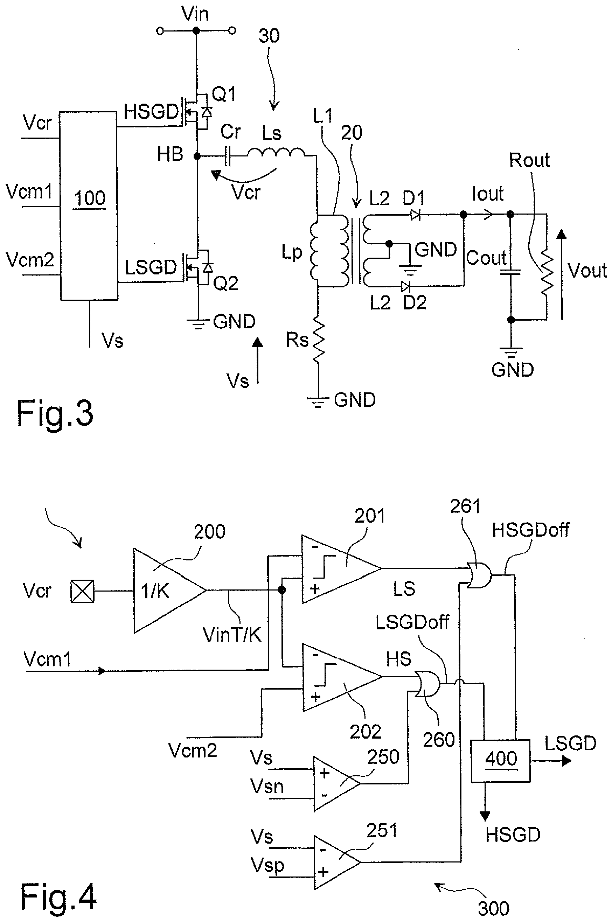

Figure 3 shows a circuit schematic of a resonant converter with a control device 100. The converter comprises a resonant load 30 preferably comprising a transformer 20 with a primary winding L1 and a secondary with two windings L2 and a LLC filter comprising the inductors Ls and Lp and the capacitor Cr; the primary winding L1 is arranged in parallel with the inductor Lp and the parallel is coupled to a terminal of a switch, but preferably with the central point HB of an half bridge (which arranged between the input or source voltage Vin and the ground GND), the common terminal of the transistors Q1 and Q2, by means of a series of the inductor Ls and the capacitor Cr, and it is connected to a sense resistance Rs connected to ground GND. The two windings L2 of the secondary are connected between ground GND and two respective diodes D1 and D2 having the cathodes in common and connected to the parallel of a resistance Rout and a capacitor Cout connected to ground GND; the voltage across the parallel Rout, Cout is the output voltage Vout of the resonant converter, while the dc output current Iout flows through Rout. Transistors Q1 and Q2 are preferably MOS transistors, particularly NMOS transistors; the drain terminal of the transistor Q2 is in common with the source terminal of the transistor Q1 and is the central point HB of the half bridge. The control device 100 is adapted to regulate the output voltage Vout.

The control device 100 has at the input a signal Vcr representative of the energy transferred from the source signal Vin to the resonant load 30, particularly representative of the energy of the capacitor Cr of the resonant load of the converter, more preferably the voltage Vcr across the capacitor Cr. The voltage across the capacitor Cr represents the energy if the voltage Vin (for example with a high voltage source) is static. If the voltage Vin is a time varying power source, a representation of the energy rises from the multiplication of Vin*Vcr; obviously the control keeps also with Vcr, but the performance decreases. Therefore a signal Vcr representative of the energy transferred from the source signal Vin to the resonant load 30 may be the signal Vcr or the signal Vin*Vcr.

The control device 100 has at the input even at least one signal or threshold Vcm1, Vcm2, but preferably two signals or thresholds Vcm1 and Vcm2. The distance between the said two thresholds Vcm1 and Vcm2 is the amount of energy that need to be transferred. Anyway if there is a resonant symmetrically powered (between the source signals Vin/2 and -Vin/2) what it could be done is a rectification of the voltage Vcr and a comparison with only one threshold Vcm3. What is really important is that the commutation is forced when an amount of energy is transferred: if the energy is measured across the capacitor, two thresholds need, because the energy is represented by the variation of voltage across the capacitor while if the capacitor works with 0 DC (as in the case of a resonant symmetrically powered between the source signals Vin/2 and -Vin/2) only one threshold Vcm3 needs, because the symmetry removes the need of the other signal to calculate the energy variation. If the energy is measured in some way, the threshold is unique and is the value of energy transferred in each semi cycle.

The control device 100 has at input also a signal representative of the derivative of the energy Ein transferred from the source signal Vin to the resonant load 30, that is a signal representative of the current Iin circulating in the resonant load, preferably a voltage Vs across the sense resistance Rs through which the current Iin of the resonant load 30 flows. More preferably the signal representative of the derivative of the energy Ein transferred from the source signal Vin to the resonant load 30 consists in the derivative of the voltage signal Vcr.

Preferably, according to a first embodiment of the invention, the signals Vcm1 and Vcm2 are predetermined signals or external signals, with Vcm1>Vcm2. The control device 100, visible in more detail in Figure 4, comprises preferably means 200 adapted to multiply the signal Vcr, that is the voltage across the capacitor Cr, by 1/K, wherein K is preferably a constant but even a parameter variable from outside. The signal Vcr/K is sent to the non-inverting input of the PWM comparator 201 and to the inverting input of the PWM comparator 202; the signal Vcm2 is at the non-inverting input of the PWM comparator 202 while the signal Vcm1 is at the inverting input of the PWM comparator 201. Therefore the signal Vcr, that is the voltage across the capacitor Cr, is directly compared with the signals Vcm1 and Vcm2. The output signals HS, LS of the PWM comparators 201 and 202 are at the input of two respective OR gates 261 and 260 having at the input the output signal of a circuit block 300, substantially a zero crossing detector of the signal Vs across the sense resistance Rs. The block 300 preferably comprises other two comparators 250 and 251; the comparator 250 is able to compare the voltage Vs across the resistance Rs with a predetermined voltage Vsn while the comparator 251 is able to compare the voltage Vs across the resistance Rs with a predetermined voltage Vsp; the voltages Vsp and Vsn are voltages close to ground GND, for example of 0,5 Volt and -0.5 Volt, The output signals of the OR gates 260 and 261 are the control pulses LSGDoff and HSGDoff that are at input of a driver 400 to generate the commands HSGD and LSGD of the switches Q1 and Q2.

K is a scale factor to adapt the signal in the resonator (of hundred of volts) to the dynamic of the control device 100 (preferably 1 or 2 Volt). The resonant capacitor Cr is forced, by the driving algorithm, to work with the DC voltage component (Vcm1+Vcm2)*k/2. If a symmetrical behavior is desired, this DC voltage component must be equal to Vin/2. For example if the system is powered at 400V, the voltage Vcr is desired to have 200V as DC voltage component so that a value k=100 can be used; in such a way the voltage Vcr multiplied by 1/K have to be compared to Vcm1=2V+ΔV and Vcm2=2V-ΔV where ΔV is a signal containing the information on the amount of energy desired to be transferred to the output. Preferably ΔV is comprised between 10 mV and some Volts.

Therefore the control device 100 employs the signal Vcr that reaches a certain value naturally, due to the current Iin flowing in the resonant load 30. Anyway if a to large value of the control signal is imposed, the current Iin in the resonant load 30 will invert its sign before the Vcr target value, so the voltage Vcr will no more grow and will not reach the desired value to have a commutation. This can be viewed also from the point of view of the DFC: it is well know that there is a lower limit of the switch frequency at which the voltage gain finishes to rise. This is also the boundary of the unwanted capacitive operative mode. In this mode the soft switching behavior of the converter is no more present. This frequency limit is not a limit of the control strategy but is intrinsically fixed by the resonant load.

Considering the apparatus of the present invention, to avoid this kind of operation and also a stall of the apparatus, when the resonant current inverts his flow before the reaching of the switching threshold, a commutation is forced. In this way the system works at constant energy, that is also the maximum energy reachable with that tank and load. More precisely the switching has to be forced slightly before the inversion of the current flow, to have enough current to ensure the soft switching of the HB node; let's say when Vs crosses (rising) the Vsn value (a slightly negative value) and crosses (falling) the Vsp value (slightly positive value).

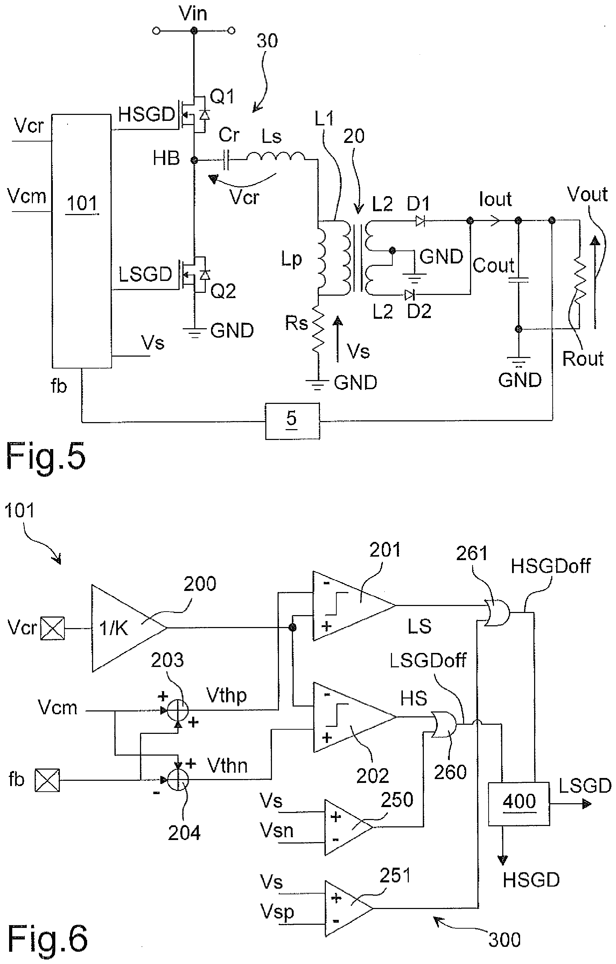

Figure 5 shows a circuit schematic of a resonant converter with a control device 101 in accordance with an embodiment of the present invention. The converter comprises a resonant load 30 preferably comprising a transformer 20 with a primary winding L1 and a secondary with two windings L2 and a LLC filter comprising the inductors Ls and Lp and the capacitor Cr; the primary winding L1 is arranged in parallel with the inductor Lp and the parallel is coupled to a terminal of a switch, but preferably with the central point HB of an half bridge (which arranged between the input or source voltage Vin and the ground GND), the common terminal of the transistors Q1 and Q2, by means of a series of the inductor Ls and the capacitor Cr, and it is connected to ground GND. The two windings L2 of the secondary are connected between ground GND and two respective diodes D1 and D2 having the cathodes in common and connected to the parallel of a resistance Rout and a capacitor Cout connected to ground GND; the voltage across the parallel Rout, Cout is the output voltage Vout of the resonant converter, while the dc output current Iout flows through Rout. Transistors Q1 and Q2 are preferably MOS transistors, particularly NMOS transistors; the drain terminal of the transistor Q2 is in common with the source terminal of the transistor Q1 and is the central point HB of the half bridge. The control device 101 is adapted to regulate the output voltage Vout.

The control device 101 has at the input a signal Vcr representative of the energy transferred from the source signal Vin to the resonant load 30, particularly representative of the energy of the capacitor Cr of the resonant load of the converter, more preferably the voltage Vcr across the capacitor Cr or the signal Vin*Vcr as above mentioned for the first embodiment. The control device 101 has at the input even at least one external signal Vcm and a feedback signal fb, that is a voltage or current signal, indicative of an output quantity of the converter. The block 5 is adapted to form the output quantity on the base of the output voltage Vout or the output current Iout of the converter and is adapted to transfer the output quantity to the primary side by providing the feedback signal fb; preferably the output quantity is the error voltage Er between the output voltage Vout or a portion thereof and a reference voltage Vref and the feedback signal fb is representative of the error voltage Er. The control device 101 has at the input a signal representative of the derivative of the energy Ein transferred from the source signal Vin to the resonant load 30, that is a signal representative of the current Iin circulating in the resonant load, preferably a voltage Vs across the sense resistance Rs through which the current Iin of the resonant load 30 flows. More preferably the signal representative of the derivative of the energy Ein transferred from the source signal Vin to the resonant load 30 consists in the derivative of the voltage signal Vcr.

According to this embodiment of the invention, the signal fb is added to or subtracted from the signal Vcm at the nodes 203 and 204 to generate the thresholds Vthn and Vthp, with Vthp>Vthn, as shown in more detail in Figure 6. The control device 101 comprises preferably means 200 adapted to multiply the signal Vcr, that is the voltage across the capacitor Cr, by 1/K, wherein K is preferably a constant but even a parameter variable from outside. The signal Vcr/K is sent to the non-inverting input of the PWM comparator 201 and to the inverting input of the PWM comparator 202; the threshold Vthn is at the non-inverting input of the PWM comparator 202 while the thresholds Vthp is at the inverting input of the PWM comparator 201. Therefore the signal Vcr, that is the voltage across the capacitor Cr, is directly compared with the signals Vthp and Vthn.

K is a scale factor to adapt the signal in the resonator (of hundred of volts) to the dynamic of the control device 100 (preferably 1 or 2 Volt). The resonant capacitor Cr is forced, by the driving algorithm, to work with the DC voltage component Vcm*k. If a symmetrical behavior is desired, this DC voltage component must be equal to Vin/2. For example if the system is powered at 400V, the voltage Vcr is desired to have 200V as DC voltage component so that a value k=100 can be used; in such a way the voltage Vcr multiplied by 1/K have to be compared to Vthp=2V+fb and Vthn=2V-fb. Preferably the feedback signal fb is comprised between 10 mV and some Volts; preferably the energy desired to be transferred to the output must balance the energy adsorbed by the load.

The output signals HS, LS of the PWM comparators 201 and 202 are at the input two respective OR gates 261 and 260 having at the input the output signal of a circuit block 300, substantially a zero crossing detector of the signal Vs across the sense resistance Rs. The block 300 preferably comprises other two comparators 250 and 251; the comparator 250 is able to compare the voltage Vs across the resistance Rs with a predetermined voltage Vsn while the comparator 251 is able to compare the voltage Vs across the resistance Rs with a predetermined voltage Vsp; the voltages Vsp and Vsn are voltages close to ground GND, for example of 0.5 Volt and -0.5 Volt. The output signals of the OR gates 260 and 261 are the control pulses LSGDoff and HSGDoff that are at input of a driver 400 to generate the commands HSGD and LSGD of the switches Q1 and Q2.

When the signal Vcr/K is lower than the threshold Vthn, the signal LSGD is low, the transistor Q2 is off and the signal HSGD is high and therefore the transistor Q1 is on. When signal Vcr/K is higher than the threshold Vthp, the signal HSGD is low and immediately switches the transistor Q1 off, but transistor Q2 which should switch on still remains switched off for a time Td due to the action of the dead time generator block (not visible). This block maintains the signal LSGD low for a time Td; this delay is needed, upon switching Q1 off, to let the voltage of the node HB (midpoint of the half-bridge) go to zero, In this way, when transistor Q2 is switched on the drain-source voltage thereof is substantially zero. The same obviously occurs during the opposite transition, between switching off the transistor Q2 and switching on the transistor Q1. This is the soft-switching mechanism that eliminates switching losses at turn-on. The time Td may be internally fixed or adapted to the transition speed of the midpoint voltage by appropriate control systems.

Therefore, after elapsing the time Td, the signal LSGD is will be high and the transistor Q2 is switched on.

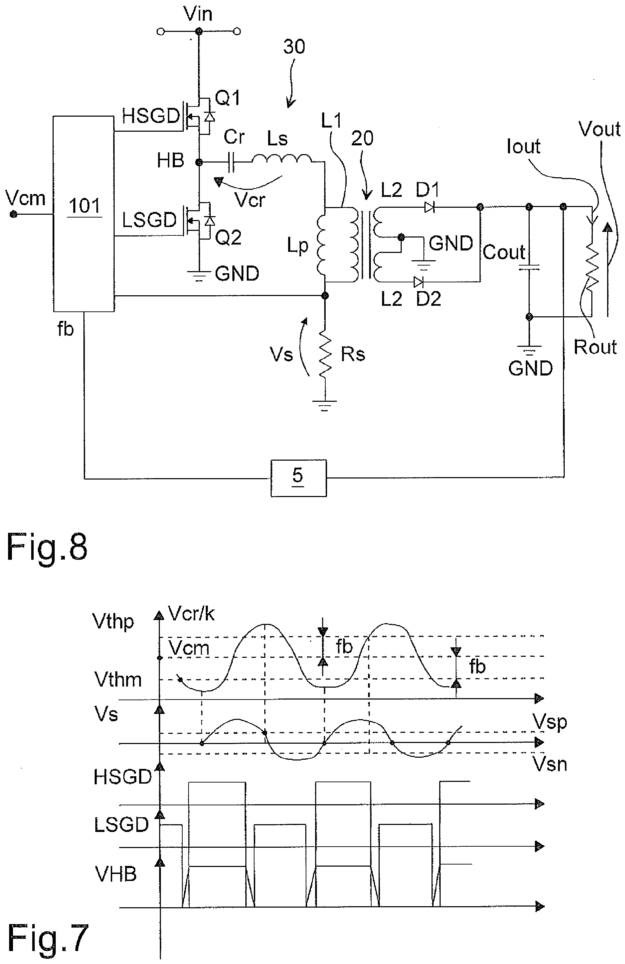

Figure 7 shows the time diagrams of the signals Vcr/K, Vcm, Vthp, Vthn, HSGD, LSGD and VHB (the voltage at the node HB) related to the control device in figures 5 and 6.

With the control device 100, 101 according to the embodiment of the present invention the power is transferred from the source to the load in each half cycle.

In fact, considering the situation wherein the switch Q1 is turned on and the switch Q2 is turned off, a current Iin flows from the voltage source Vin to the resonant load 30 in the time interval [t1:t2]. The energy Ein provided by the input voltage source Vin in the time interval [t1:t2] is: Ein=Pin*$\Delta$t=(Vin*Iin)*-$\Delta$t, where $\Delta$t=t2-t1. As the current Iin flows through the capacitor Cr, it occurs $\Delta$Vcr=Iin*$\Delta$t/Cr and Ein=Vin*Cr*$\Delta$Vcr where $\Delta$Vcr=Vcr(t2)-Vcr(t1).

Assuming that the converter is not dissipative, all the energy supplied by the voltage source Vin to the converter is then delivered to the load, in term of average. The switching circuit Q1, Q2 switches when Vcr is equal to Vcm2 or Vcml; in this way at every switching cycle the resonant circuit is forced to take from the source Vin the energy Ein=Vin*K*Cr*(Vcm1-Vcm2). This energy will be then delivered to the load.

In this case, the voltage source Vin provides energy only when the transistor Q1 is on. In the other cycle, the energy flow is due to the voltage accumulated across the capacitor Cr. It can be assumed, without any lack of generality, that the converter is powered by two voltage sources Vin/2 and - Vin/2, and a DC voltage equal to 0V is present across the capacitor Cr. So from the point of view of DC equation, it can be written:

Ein=Vin/2*Cr*K*(Vcm1-Vcm2) at every half cycle and the output energy Eout=Ein=Vout*Iout*$\Delta$t where Vout/Vin=K*Cr*(Vcm1-Vcm2)/(2*Iout*$\Delta$t) and since dt is the half of the period of the switching cycle and considering H($f_{sw}$)=Vout/Vin where $f_{sw}$ is the switching frequency, it occurs H($f_{sw}$)/ $f_{sw}$=K*Cr*(Vcm1-Vcm2)/Iout. This quantity is not a degree of freedom, but is defined by the transfer function H(f) of the resonant filter with the effective output load, and normally it has small variation in the useful operative range of the converter.

The preceding equation may be rewritten as:

$$G_{dc\_ls}=Vout/(Vcm1-Vcm2)=Vin*K*Cr/(Iout*T_{sw})$$

that is the gain from input control quantity to output voltage, considered in term of large signal; $T_{sw}$ is the switching period.

From the equations it comes up that the quantity (Vcm1-Vcm2) rises if the load rises. To better accommodate larger variations of load, the factor K can changes between discrete values; in this way (Vcm1-Vcm2) can be maintained in a reasonable voltage range because the K acts as a scaling factor.

Also this converter may be used as an amplifier in a simpler way compared to the one with the DFC control, where the (Vcml-Vcm2) is the quantity to amplify. If the output load is a resistive load Ro it occurs Iout=Vout/Ro and :

Vout=sqrt(Vin*K*Cr*(Vcm1-Vcm2)*Ro*$f_{sw}$) where $f_{sw}$ is the switching frequency that the system will naturally use to transfer the desired amount of energy.

Since for this kind of use, the converter has to work in a zone where the gain can have a large variation, this happens also where the gain changes abruptly with the frequency; so we can assume that the frequency will be almost constant. With this assumption, the distortion introduced by the system loaded with a resistor, is a sqrt distortion, plus a little amount due to the frequency term f. In some case it can be tolerated, otherwise it can be compensated by a pre-distortion or a feedback amplifier, in a much more easy way compared to a DFC system (because the distortion is smaller).

The system described provides a measure of the energy of the only resonant capacitor, but has been observed that this energy is representative of the energy transferred from the source voltage Vin to the resonant load in every operational mode. In this condition there is an almost system without memory which delivers energy from input voltage source to the output dependently by control voltage signal. Considering the output voltage as output signal, there is the action of the filtering capacitor that introduces a state variable, that is the only pole of the system.

In fact, looking the control system from the point of view of small signal analysis, it can be demonstrated that the system almost behave as a single pole system and the complete transfer function is:

$$\frac{v_o(s)}{v_c(s)} = \frac{V_{in} \cdot K \cdot C_r}{I_o T_s + I_o \alpha_s V_o + C_o V_o T_s s} = \frac{G_{vc}}{s / s_{pvc} + 1}$$

$$G_{vc} = \frac{V_{in} \cdot K \cdot C_r}{I_o T_s + I_o \alpha_s V_o}$$

$$s_{pvc} = - \frac{I_o T_s + I_o \alpha_s V_o}{C_o V_o T_s}$$

$$\alpha_s = \frac{dt_s}{dv_o}\bigg|_{(V_o, I_o, T_s)}$$

Where $V_0$ is the output voltage, $I_0$ is the output current, $T_s$ is the switching period, $V_{in}$ is the input voltage, $C_0$ is the output capacitor, $C_r$ is the capacitor of the resonant load, $\alpha_s$ is the variation of the switching period when a small variation of $V_0$ happens, and $v_c$ is our control quantity, for example Vthp-Vthn or Vcm1-Vcm2.

These formula are considered in term of small signal variation; considering this, it will not be surprising that the gain Gvc differs from $G_{dc\_ls}$ previously founded, that is a large signal quantity.

There is a variable transfer function depending of the working point of the converter, but these quantity can be easy found or bounded if the resonant parameter are specified. For example $\alpha_s$ can be easy found, for example graphically, if the resonant load and the output load are defined.

The previous formula were found assuming that the energy of the resonant load reaches a stable value in few cycles. This was verified in all tested practical situation; it implies that the system has singularities near the switching frequency that was neglected. Anyway, this is a better situation than a DFC system, were the singularities heavy vary their position, potentially reaching very low frequencies.

With these reasonable assumption the system can be considered as a single pole system, and a feedback loop can be easy designed.

The control strategy according to the present invention, since it works in term of energy, reduces this risk of overcurrent, because the energy transfer is directly controlled. Also the switching frequency will be the proper one to deliver the wanted energy.

Figure 8 shows a circuit schematic of a resonant converter with a control device 101 in accordance with a variant of the first or second embodiment of the present invention, The converter in figure 8 differs from the converter in figure 5 by the use of the voltage Vs at the terminals of the sense resistance Rs is at the input of the control device 101 in the place of the voltage Vcr.

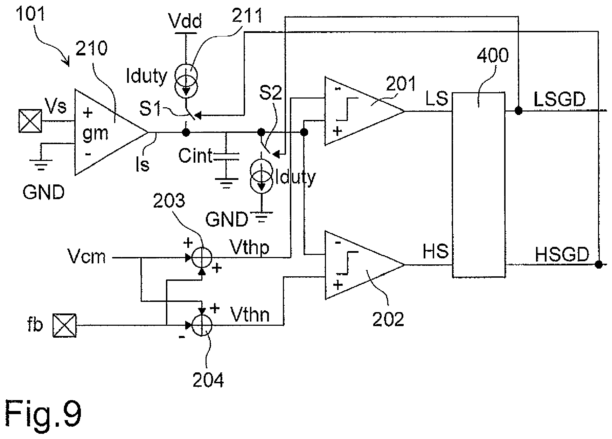

According to a variant of the second embodiment of the invention, the control device 101 comprises, as shown in Figure 9, an operational trasconductance amplifier 210 adapted to amplify by a factor gm the signal Vs at the input to obtain a current Is which is integrated by a capacitor Cint by obtaining a voltage Vint. The voltage Vint is sent to the non-inverting input of the PWM comparator 201 and to the inverting input of the PWM comparator 202; the threshold Vthn is at the non-inverting input of the PWM comparator 202 while the thresholds Vthp is at the inverting input of the PWM comparator 201. The output signals HS, LS of the PWM comparators 201 and 202 are at the input of a driver 400 adapted to generate the driving signals HSGD and LSGD for the transistors Q1 and Q2,

Preferably the control device comprises means 211, 212 adapted to set a duty cycle of 50% for the control of the half bridge Q1, Q2. The means 211, 212 comprise two current generators of a current Iduty which is integrated with the current Is. More precisely the current Iduty is added to the current Is by means of the current generator 211 which is connected upstream the capacitor Cint by the switch S1 controlled by the signal HSGD in one half cycle; in this way a current Is+Iduty is integrated. In the other half cycle the current Iduty is subtracted from the current Is by means of the current generator 212 which is connected downstream the capacitor Cint by the switch S2 controlled by the signal LSGD in the other half cycle; in this way a current Is-Iduty is integrated. The current Iduty will have a null contribute if the duty cycle is of 50%.

An integrated circuit U1 comprising the control device 100, 101 for a switching converter in accordance with the present invention may be implemented; the control device may be any one of those shown in figures 4, 6 and 9. The circuit is integrated in a semiconductor chip.

The capacitor Cint will preferably be a component external to the integrated device U1 comprising the control device 101 in accordance with the invention, and therefore connected to a special pin to provide the user with a calibration means of the time constant of the integration block.

Alternatively, the capacitor Cint may be integrated in the integrated circuit U1.

## Claims

1. A control device for a resonant converter, said converter comprising a switching circuit (Q1-Q2) adapted to drive a resonant load (30), said resonant load comprising at least one capacitor (Cr), said converter being adapted to convert a source signal (Vin) into an output signal (Vout), said switching circuit comprising at least a half bridge of first (Q1) and second (Q2) switches, the central point (HB) of said half bridge being connected to said resonant load (30), wherein said control device comprises generating means (201, 202, 300) adapted to generate at least a control signal (HSGD, LSGD) for the switching circuit, wherein said control device (101) is configured to receive a signal (Vcr) representative of the energy (Ein) transferred from the source signal (Vin) to the resonant load (30), **characterized in that** said generating means (201, 202, 300) are configured to generate at least the control signal (HSGD, LSGD) by:

   - comparing said signal (Vcr) representative of the energy (Ein) transferred from the source signal (Vin) to the resonant load (30) with a first (Vthp) and a second (Vthn) signal, the first signal having a higher value than the second signal, such that said switching circuit is configured to switch when said signal (Vcr) representative of the energy (Ein) transferred from the source signal (Vin) to the resonant load (30) is equal to said first signal (Vthp) or said second signal (Vthn), and

   wherein said control device (101) comprises further means (203, 204) configured to form said first signal (Vthp) and said second signal (Vthn) by adding to and subtracting from a reference signal (Vcm) a signal (fb) representative of an output quantity of the converter.

2. A device according to claim 1, **characterized in that** said output signal is an output voltage (Vout), and said output quantity (Vout) is said output voltage (Vout).

3. A device according to claim1, **characterized in that** said reference signal (Vcm) is an external signal.

4. A device according to any one of the preceding claims, **characterized in that** said generating means (201, 202, 300) are adapted to generate at least a control signal (HSGD, LSGD) of said switching circuit additionally in response of a passage by substantially the zero value of a signal (Vs) representative of the derivative of the energy (Ein) transferred from the source signal (Vin) to the resonant load (30).

5. A device according to claim 4, **characterized in that** said generating means (201, 202, 300) comprises first (250) and second (251) means adapted to compare said signal (Vs) representative of the derivative of the energy (Ein) transferred from the source signal (Vin) to the resonant load (30) respectively with a signal (Vsp) slightly higher than zero value and another signal (Vsn) slightly lower than zero value.

6. A device according to claim 1, **characterized in that** it comprises integration means (Cint) adapted to integrate a current signal (Iin) representative of the current circulating in the resonant load (30) which is a signal representative of the derivative of the energy (Ein) transferred from the source signal (Vin) to the resonant load (30), said integrated signal being the signal representative of the energy (Ein) transferred from the source signal (Vin) to the resonant load (30).

7. A device according to claim 6, **characterized in that** said integration means (Cint) are adapted to integrate a current formed by said current signal (Iin) representative of the current circulating in the resonant load (30) and another current so as to set a duty cycle of 50% for the control of the half bridge.

8. A device according to claim 1, **characterized in that** said signal (Vcr) representative of the energy (Ein) transferred from the source signal (Vin) to the resonant load (30) is a signal representative of the voltage (Vcr) across the capacitor (Cr) of the resonant load.

9. A device according to claim 1, **characterized in that** the transfer function between the output signal of the converter and the difference between the first and the second signal (Vthp, Vthn) has a single pole.

10. An integrated circuit comprising a control device for a switching converter as defined in any one of the preceding claims.

11. An integrated circuit according to claim 10, comprising an integration means (Cint), **characterized in that** the integration means (Cint) comprise a capacitor external to the integrated circuit.

12. A resonant converter comprising a switching circuit (Q1-Q2) adapted to drive a resonant load (30), said resonant load comprising at least one capacitor (Cr), said converter being adapted to convert an input signal (Vin) into an output signal (Vout), said switching circuit comprising at least a half bridge of first (Q1) and second (Q2) switches, the central point (HB) of said half bridge being connected to said resonant load, **characterized in that** it comprises a control device as defined in any one of the claims from 1 to 9, a sense element (Rs) arranged to sense the current (Iin) circulating in the resonant load, and **in that** said resonant load is coupled in series to the sense element (Rs), said sense element being configured to provide a signal (Vs) representative of the current (Iin) circulating in the resonant load.

13. A resonant converter as defined in claim 12, **characterized in that** the resonant load comprises a transformer (20) with at least a primary winding (L1) and at least a secondary winding (L2).

14. A control method for a resonant converter, said converter comprising a switching circuit (Q1-Q2) adapted to drive a resonant load (30), said resonant load comprising at least one capacitor (Cr), said converter being adapted to convert an input signal (Vin) into an output signal (Vout), said switching circuit comprising at least a half bridge of first (Q1) and second (Q2) switches, the central point (HB) of said half bridge being connected to said resonant load (30),
**characterized in that** it comprises:

- generating at least a control signal (HSGD, LSGD) of said switching circuit cycle by cycle by comparing a signal (Vcr) representative of the energy (Ein) transferred from the source signal (Vin) to the resonant load (30) with a first (Vthp) and a second (Vthn) signal, the first signal having a higher value than the second signal, and switching said switching circuit when said signal (Vcr) representative of the energy (Ein) transferred from the source signal (Vin) to the resonant load (30) is equal to said first signal (Vthp) or said second signal (Vthn), and
- forming said first signal (Vthp) and said second signal (Vthn) by adding to and subtracting from a reference signal (Vcm) a signal (fb) representative of an output quantity of the converter.

**Patentansprüche**

1. Steuervorrichtung für einen Resonanzwandler, wobei der Wandler einen Schaltkreis (Q1-Q2) umfasst, welcher adaptiert ist, um eine Resonanzlast (30) anzusteuern, wobei die Resonanzlast zumindest einen Kondensator (Cr) umfasst, wobei der Wandler adaptiert ist, um ein Quellsignal (Vin) in ein Ausgabesignal (Vout) zu wandeln, wobei der Schaltkreis zumindest eine Halbbrücke von ersten (Q1) und zweiten (Q2) Schaltern umfasst, wobei der Mittelpunkt (HB) der Halbbrücke mit der Resonanzlast (30) verbunden ist,
wobei die Steuervorrichtung Erzeugungsmittel (201, 202, 300) umfasst, welche adaptiert sind, um zumindest ein Steuersignal (HSGD, LSGD) für den Schaltkreis zu erzeugen, wobei die Steuervorrichtung (101) konfiguriert ist, um ein Signal (Vcr) zu empfangen, welches der von dem Quellsignal (Vin) an die Resonanzlast (30) übertragenen Energie (Ein) entspricht,
**dadurch gekennzeichnet, dass** die Erzeugungsmittel (201, 202, 300) konfiguriert sind, um zumindest das Steuersignal (HSGD, LSGD) zu erzeugen durch:

   - Vergleichen des Signals (Vcr), welches der von dem Quellsignal (Vin) an die Resonanzlast (30) übertragenen Energie (Ein) entspricht, mit einem ersten (Vthp) und einem zweiten (Vthn) Signal, wobei das erste Signal einen höheren Wert aufweist als das zweite Signal, sodass der Schaltkreis konfiguriert ist, zu schalten, wenn das Signal (Vcr), welches der von dem Quellsignal (Vin) an die Resonanzlast (30) übertragenen Energie (Ein) entspricht, gleich dem ersten Signal (Vthp) oder dem zweiten Signal (Vthn) ist, und

   wobei die Steuervorrichtung (101) weitere Mittel (203, 204) umfasst, welche konfiguriert sind, um das erste Signal (Vthp) und das zweite Signal (Vthn) durch Addieren und Subtrahieren eines Signals (fb), welches eine Ausgabemenge des Wandlers entspricht, zu und von einem Referenzsignal (Vcm) zu bilden.

2. Vorrichtung nach Anspruch 1, **dadurch gekennzeichnet, dass** das Ausgabesignal eine Ausgabespannung (Vout) ist und die Ausgabemenge (Vout) die Ausgabespannung (Vout) ist.

3. Vorrichtung nach Anspruch 1, **dadurch gekennzeichnet, dass** das Referenzsignal (Vcm) ein externes Signal ist.

4. Vorrichtung nach einem der vorstehenden Ansprüche, **dadurch gekennzeichnet, dass** die Erzeugungsmittel (201, 202, 300) adaptiert sind, um zumindest ein Steuersignal (HSGD, LSGD) des Schaltkreises zusätzlich als Reaktion auf einen Durchgang durch im Wesentlichen den Nullwert eines Signals (Vs) zu erzeugen, welches der Ableitung der von dem Quellsignal (Vin) an die Resonanzlast (30) übertragenen Energie (Ein) entspricht.

5. Vorrichtung nach Anspruch 4, **dadurch gekennzeichnet, dass** das Erzeugungsmittel (201, 202, 300) erste (250) und zweite (251) Mittel umfasst, welche adaptiert sind, um das Signal (Vs), welches der Ableitung der von dem Quellsignal (Vin) an die Resonanzlast (30) übertragenen Energie (Ein) entspricht, jeweils mit einem Signal (Vsp), welches etwas höher als der Nullwert ist, und einem anderen Signal (Vsn), welches etwas niedriger als der Nullwert ist, zu vergleichen.

6. Vorrichtung nach Anspruch 1, **dadurch gekennzeichnet, dass** es Integrationsmittel (Cint) umfasst, welche adaptiert sind, um ein Stromsignal (Iin) zu integrieren, welches dem in der Resonanzlast (30) fließenden Strom entspricht, welches ein Signal ist, welches der Ableitung der von der Quellsignal (Vin) an die Resonanzlast (30) übertragenen Energie (Ein) entspricht, wobei das integrierte Signal das Signal ist, welches der von dem Quellsignal (Vin) an die Resonanzlast (30) übertragenen Energie (Ein) entspricht.

7. Vorrichtung nach Anspruch 6, **dadurch gekennzeichnet, dass** die Integrationsmittel (Cint) adaptiert sind, um einen durch das Stromsignal (Iin), welches dem in der Resonanzlast (30) fließendem Strom entspricht, gebildeten Strom und einen anderen Strom zu integrieren, um einen Betriebszyklus von 50 % für die Steuerung der Halbbrücke einzustellen.

8. Vorrichtung nach Anspruch 1, **dadurch gekennzeichnet, dass** das Signal (Vcr) , das der von dem Quellsignal (Vin) an die Resonanzlast (30) übertragenen Energie (Ein) entspricht, ein Signal ist, welches der Spannung (Vcr) an dem Kondensator (Cr) der Resonanzlast entspricht.

9. Vorrichtung nach Anspruch 1, **dadurch gekennzeichnet, dass** die Übertragungsfunktion zwischen dem Ausgabesignal des Wandlers und der Differenz zwischen dem ersten und zweiten Signal (Vthp, Vthn) einen einzelnen Pol aufweist.

**10.** Integrierte Schaltung, umfassend eine Steuervorrichtung für einen Schaltwandler wie in einem der vorstehenden Ansprüche definiert.

**11.** Integrierte Schaltung nach Anspruch 10, umfassend ein Integrationsmittel (Cint), **dadurch gekennzeichnet, dass** die Integrationsmittel (Cint) einen Kondensator außerhalb der integrierten Schaltung umfassen.

**12.** Resonanzwandler, umfassend einen Schaltkreis (Q1-Q2), welcher adaptiert ist, um eine Resonanzlast (30) anzusteuern, wobei die Resonanzlast zumindest einen Kondensator (Cr) umfasst, wobei der Wandler adaptiert ist, um ein Eingangssignal (Vin) in ein Ausgabesignal (Vout) zu wandeln, wobei der Schaltkreis zumindest eine Halbbrücke von ersten (Q1) und zweiten (Q2) Schaltern umfasst, wobei der Mittelpunkt (HB) der Halbbrücke mit der Resonanzlast verbunden ist, **dadurch gekennzeichnet, dass** er eine Steuervorrichtung wie in einem der Ansprüche 1 bis 9 definiert, ein Sensorelement (Rs), welches eingerichtet ist, um den in der Resonanzlast fließenden Strom (Iin) zu erfassen, umfasst, und dass die Resonanzlast in Serie mit dem Sensorelement (Rs) geschaltet ist, wobei das Sensorelement konfiguriert ist, um ein Signal (Vs) bereitzustellen, welches dem in der Resonanzlast fließenden Strom (Iin) entspricht.

**13.** Resonanzwandler wie in Anspruch 12 definiert, **dadurch gekennzeichnet, dass** die Resonanzlast einen Transformator (20) mit zumindest einer Primärwicklung (L1) und zumindest einer Sekundärwicklung (L2) umfasst.

**14.** Steuerverfahren für einen Resonanzwandler, wobei der Wandler einen Schaltkreis (Q1-Q2) umfasst, welcher adaptiert ist, um eine Resonanzlast (30) anzusteuern, wobei die Resonanzlast zumindest einen Kondensator (Cr) umfasst, wobei der Wandler adaptiert ist, um ein Eingangssignal (Vin) in ein Ausgabesignal (Vout) zu wandeln, wobei der Schaltkreis zumindest eine Halbbrücke von ersten (Q1) und zweiten (Q2) Schaltern umfasst, wobei der Mittelpunkt (HB) der Halbbrücke mit der Resonanzlast (30) verbunden ist,
**dadurch gekennzeichnet, dass** es umfasst:

- Erzeugen zumindest eines Steuersignals (HSGD, LSGD) des Schaltkreises zyklusabhängig durch Vergleichen eines Signals (Vcr), welches der von dem Quellsignal (Vin) an die Resonanzlast (30) übertragenen Energie (Ein) entspricht, mit einem ersten (Vthp) und einem zweiten (Vthn) Signal, wobei das erste Signal einen höheren Wert aufweist als das zweite Signal, und Schalten des Schaltkreises, wenn das Signal (Vcr), welches der von dem Quellsignal (Vin) an die Resonanzlast (30) übertragenen Energie (Ein) entspricht, gleich dem ersten Signal (Vthp) oder dem zweiten Signal (Vthn) ist, und
- Bilden des ersten Signals (Vthp) und des zweiten Signals (Vthn) durch Addieren und Subtrahieren eines Signals (fb), welches eine Ausgabemenge des Wandlers entspricht, zu und von einem Referenzsignal (Vcm).

**Revendications**

**1.** Dispositif de commande pour convertisseur résonnant, ledit convertisseur comprenant un circuit de commutation (Q1-Q2) conçu pour attaquer une charge résonnante (30), ladite charge résonnante comprenant au moins un condensateur (Cr), ledit convertisseur étant conçu pour convertir un signal source (Vin) en un signal de sortie (Vout), ledit circuit de commutation comprenant au moins un demi-pont constitué d'un premier (Q1) et d'un second (Q2) interrupteur, le point milieu (HB) dudit demi-pont étant connecté à ladite charge résonnante (30), ledit dispositif de commande comprenant des moyens de génération (201, 202, 300) conçus pour générer au moins un signal de commande (HSGD, LSGD) pour le circuit de commutation, ledit dispositif de commande (101) étant configuré pour recevoir un signal (Vcr) représentant l'énergie (Ein) transférée du signal source (Vin) à la charge résonnante (30), **caractérisé en ce que** lesdits moyens de génération (201, 202, 300) sont configurés pour générer au moins le signal de commande (HSGD, LSGD) par :

- comparaison dudit signal (Vcr) représentant l'énergie (Ein) transférée du signal source (Vin) à la charge résonnante (30) avec un premier (Vthp) et un second (Vthn) signal, le premier signal ayant une valeur supérieure à celle du second signal, de sorte que ledit circuit de commutation soit configuré pour commuter quand ledit signal (Vcr) représentant l'énergie (Ein) transférée du signal source (Vin) à la charge résonnante (30) est égal audit premier signal (Vthp) ou audit second signal (Vthn), et

ledit dispositif de commande (101) comprenant des moyens supplémentaires (203, 204) configurés pour former ledit premier signal (Vthp) et ledit second signal (Vthn) par addition à un signal de référence (Vcm), et soustraction du signal de référence (Vcm), d'un signal (fb) représentant une grandeur de sortie du convertisseur.

2. Dispositif selon la revendication 1, **caractérisé en ce que** ledit signal de sortie est une tension de sortie (Vout), et ladite grandeur de sortie (Vout) est ladite tension de sortie (Vout).

3. Dispositif selon la revendication 1, **caractérisé en ce que** ledit signal de référence (Vcm) est un signal externe.

4. Dispositif selon l'une quelconque des revendications précédentes, **caractérisé en ce que** lesdits moyens de génération (201, 202, 300) sont conçus pour générer au moins un signal de commande (HSGD, LSGD) dudit circuit de commutation en outre en réponse à un passage sensiblement par la valeur zéro d'un signal (Vs) représentant la dérivée de l'énergie (Ein) transférée du signal source (Vin) à la charge résonnante (30).

5. Dispositif selon la revendication 4, **caractérisé en ce que** lesdits moyens de génération (201, 202, 300) comprennent des premiers (250) et seconds (251) moyens conçus pour comparer ledit signal (Vs) représentant la dérivée de l'énergie (Ein) transférée du signal source (Vin) à la charge résonnante (30) respectivement avec un signal (Vsp) légèrement supérieur à la valeur zéro et un autre signal (Vsn) légèrement inférieur à la valeur zéro.

6. Dispositif selon la revendication 1, **caractérisé en ce qu'**il comprend des moyens d'intégration (Cint) conçus pour intégrer un signal de courant (Iin) représentant le courant circulant dans la charge résonnante (30), qui est un signal représentant la dérivée de l'énergie (Ein) transférée du signal source (Vin) à la charge résonnante (30), ledit signal intégré étant le signal représentant l'énergie (Ein) transférée du signal source (Vin) à la charge résonnante (30).

7. Dispositif selon la revendication 6, **caractérisé en ce que** lesdits moyens d'intégration (Cint) sont conçus pour intégrer un courant formé par ledit signal de courant (Iin) représentant le courant circulant dans la charge résonnante (30) et un autre courant de façon à régler un rapport cyclique de 50 % pour la commande du demi-pont.

8. Dispositif selon la revendication 1, **caractérisé en ce que** ledit signal (Vcr) représentant l'énergie (Ein) transférée du signal source (Vin) à la charge résonnante (30) est un signal représentant la tension (Vcr) aux bornes du condensateur (Cr) de la charge résonnante.

9. Dispositif selon la revendication 1, **caractérisé en ce que** la fonction de transfert entre le signal de sortie du convertisseur et la différence entre le premier et le second signal (Vthp, Vthn) a un seul pôle.

10. Circuit intégré, comprenant un dispositif de commande pour convertisseur à découpage tel que défini dans l'une quelconque des revendications précédentes.

11. Circuit intégré selon la revendication 10, comprenant des moyens d'intégration (Cint), **caractérisé en ce que** les moyens d'intégration (Cint) comprennent un condensateur externe au circuit intégré.

12. Convertisseur résonnant comprenant un circuit de commutation (Q1-Q2) conçu pour attaquer une charge résonnante (30), ladite charge résonnante comprenant au moins un condensateur (Cr), ledit convertisseur étant conçu pour convertir un signal d'entrée (Vin) en un signal de sortie (Vout), ledit circuit de commutation comprenant au moins un demi-pont constitué d'un premier (Q1) et d'un second (Q2) interrupteur, le point milieu (HB) dudit demi-pont étant connecté à ladite charge résonnante, **caractérisé en ce qu'**il comprend un dispositif de commande tel que défini dans l'une quelconque des revendications 1 à 9, un élément de détection (Rs) destiné à détecter le courant (Iin) circulant dans la charge résonnante, et **en ce que** ladite charge résonnante est couplée en série à l'élément de détection (Rs), ledit élément de détection étant configuré pour fournir un signal (Vs) représentant le courant (Iin) circulant dans la charge résonnante.

13. Convertisseur résonnant tel que défini dans la revendication 12, **caractérisé en ce que** la charge résonnante comprend un transformateur (20) comportant au moins un enroulement primaire (L1) et au moins un enroulement secondaire (L2).

14. Procédé de commande pour convertisseur résonnant, ledit convertisseur comprenant un circuit de commutation (Q1-Q2) conçu pour attaquer une charge résonnante (30), ladite charge résonnante comprenant au moins un condensateur (Cr), ledit convertisseur étant conçu pour convertir un signal d'entrée (Vin) en un signal de sortie (Vout), ledit circuit de commutation comprenant au moins un demi-pont constitué d'un premier (Q1) et d'un second (Q2) interrupteur, le point milieu (HB) dudit demi-pont étant connecté à ladite charge résonnante (30),

**caractérisé en ce qu'**il comprend :

- la génération d'au moins un signal de commande (HSGD, LSGD) dudit circuit de commutation cycle par cycle par comparaison d'un signal (Vcr) représentant l'énergie (Ein) transférée du signal source (Vin) à la charge résonnante (30) avec un premier (Vthp) et un second (Vthn) signal, le premier signal ayant une valeur supérieure à celle du second signal, et commutation dudit circuit de commutation quand ledit signal (Vcr) représentant l'énergie (Ein) transférée du signal source (Vin) à la charge résonnante (30) est égal audit premier signal (Vthp) ou audit second signal (Vthn), et
- la formation dudit premier signal (Vthp) et dudit second signal (Vthn) par addition à un signal de référence (Vcm), et soustraction du signal de référence (Vcm), d'un signal (fb) représentant une grandeur de sortie du convertisseur.

Fig.1

Fig.2

Fig.3

Fig.4

Fig.5

Fig.6

Fig.8

Fig.7

Fig.9

**EP 2 538 535 B1**

**REFERENCES CITED IN THE DESCRIPTION**

**Patent documents cited in the description**

- WO 2011055285 A2
- US 2009251926 A1
- US 7313004 B1